# EUROPÄISCHE PATENTSCHRIFT

(11) **EP 2 681 890 B1**
(45) Veröffentlichungstag und Bekanntmachung des Hinweises auf die Patenterteilung: **09.05.2018**
(21) Anmeldenummer: 11706492.3
(22) Anmeldetag: 02.03.2011
(51) Int. Cl.: H04L 29/06, H04W 4/22, H04M 3/42, H04W 76/04, H04M 3/38, H04W 76/00

(54) **VERFAHREN ZUR KOMMUNIKATION UND KOMPONENTE IN EINEM KOMMUNIKATIONSNETZWERK**
METHOD FOR COMMUNICATION AND COMPONENTS IN A COMMUNICATIONS NETWORK
PROCÉDÉ DE COMMUNICATION ET COMPOSANTS DANS UN RÉSEAU DE COMMUNICATION

(43) Veröffentlichungstag der Anmeldung: 08.01.2014
(73) Patentinhaber: Unify GmbH & Co. KG, 80807 München (DE)
(72) Erfinder: TIETSCH, Michael, 86916 Kaufering (DE); KLAGHOFER, Karl, 81373 München (DE); PRANGE, Holger, 81373 München (DE); SCHARNAGL, Thomas, A-2380 Perchtoldsdorf (AT)
(74) Vertreter: Fuchs Patentanwälte Partnerschaft mbB
(86) Internationale Anmeldenummer: PCT/EP2011/001042
(87) Internationale Veröffentlichungsnummer: WO 2012/116713

(56) Entgegenhaltungen:
- EP-A1- 2 131 562
- US-A1- 2003 037 146
- US-A1- 2008 226 049

## Beschreibung

Die Erfindung betrifft ein Verfahren zur Kommunikation gemäß dem Oberbegriff des Anspruchs 1 und eine entsprechende Komponente zur Unterstützung eines solchen Verfahrens in einem Kommunikationsnetzwerk, insbesondere in einem Unternehmens-Telefonnetzwerk.

Um eine ausreichende Qualität und die Durchführbarkeit von wichtigen Anrufen in Unternehmens-Telefonnetzwerken nach Möglichkeit unter allen Umständen sicherzustellen, können in herkömmlichen Kommunikationsnetzwerken Berechtigungsstufen für bestimmte Teilnehmer vergeben werden. So kann einem bestimmten Teilnehmer A eine hohe Berechtigungsstufe vergeben werden, einem Teilnehmer B eine mittlere und einem Teilnehmer C eine niedrige Berechtigungsstufe. Andere Teilnehmer eines Unternehmens-Telefonnetzwerkes haben ohne weitere Maßnahmen keine besondere Berechtigungsstufe.

Wenn ein erster Teilnehmer in einem Gespräch mit einem zweiten Teilnehmer ist, kann dieser oder können beide Teilnehmer von einem dritten Teilnehmer nicht erreicht werden, solange das Gespräch noch aktiv ist. Der anrufende dritte Teilnehmer muss warten, bis dieses Gespräch beendet ist. Wenn nun aber der anrufende dritte Teilnehmer eine bestimmte Berechtigungsstufe hat, beispielsweise eine höhere Berechtigungsstufe als die beiden an dem Gespräch beteiligten Teilnehmer, dann wird das aktive Gespräch bei entsprechender Einrichtung des Telefon-Netzwerks ausgelöst, und der dritte Teilnehmer mit der entsprechenden höheren Berechtigungsstufe kann ein Gespräch zu dem von ihm gewünschten ZielTeilnehmer aufbauen. Auf diese Weise ist sichergestellt, dass unter Verwendung der Berechtigungsstufen immer der Zielteilnehmer des höher berechtigten anrufenden Teilnehmers erreichbar gemacht wird.

Weiters könnten zusätzliche Ressourcen, beispielsweise Bandbreite-Kapazitäten, für einen Teilnehmer mit einer entsprechenden Berechtigungsstufe zur Verfügung gestellt werden. Die Berechtigungsstufe eines Teilnehmers, also seine Berechtigung, einen Ruf mit bestimmter Priorität zu führen, wird heute üblicherweise an einem sogenannten Soft-Switch konfiguriert und häufig über hierfür geeignete Authentifizierungsmechanismen verifiziert. Dabei ist einem Teilnehmer gewöhnlich eine Berechtigungsstufe dauerhaft zugeordnet, und Änderungen der Berechtigungsstufe eines Teilnehmers bedürfen entsprechender technischadministrativer Eingriffe. Bei Engpässen im Hinblick auf Ressourcen und Bandbreiten kann diese feste Zuordnung der Berechtigungsstufen und Bandbreiten zu Problemen führen.

Die drei Dokumente EP 2 131 562 A1, US 2008/0226049 A1 und US 2003/0037146 A1 offenbaren jeweils Verfahren zur Kommunikation in einem Kommunikationsnetzwerk gemäß dem Oberbegriff des Anspruchs 1.

Die EP 2 131 562 A1 lehrt, einem Benutzer eine festgelegte Berechtigungsstufe zuzuweisen und es diesem Benutzer auf dessen Antrag bzw. Anfrage hin zu ermöglichen, eine Änderung seiner Berechtigungsstufe - insbesondere eine Verbesserung der Berechtigungsstufe - zu erreichen. Hierzu muss der Benutzer jedoch autorisiert sein und eine entsprechende Authentifizierung durchlaufen haben.

Die US 2008/0226049 A1 offenbart, in einem Konferenzsystem einem ersten Aufstellungsort eine erste Priorität und einem zweiten Aufstellungsort eine zweite Priorität zuzuweisen und von den entsprechenden Aufstellungsorten stammende Medienströme zu mischen und mit der ortsabhängig zugewiesenen Priorität zu verarbeiten. Gegebenenfalls wird bei Endgeräten, die einem ersten Aufstellungsort zugeordnet sind und sich zu einem zweiten Aufstellungsort hin bewegen, die zugewiesene Priorität entsprechend korrigiert.

Die US 2003/0037146 A1 zeigt ein Verfahren zum Betrieb von mobilen Telekommunikationsendgeräten während des Knappwerdens oder Ausfallens von Ressourcen. Bei dem Verfahren wird eine entsprechende Kommunikationssitzung in einen Haltezustand gebracht, wonach diese Sitzung wieder in einen aktiven Zustand überführt wird, wenn wieder genügend Ressourcen zur Verfügung stehen. Mittels einer geeigneten Nachricht zur Anforderung von Ressourcen können diese gegebenenfalls zugeteilt werden. Optional kann die Zuordnung von zusätzlichen Ressourcen mittels Durchführung einer Auktion ausgeführt werden.

Der vorliegenden Erfindung liegt die Aufgabe zu Grunde, den Zugriff auf Ressourcen in Telekommunikationssystemen durch eine flexible Vergabe von Berechtigungen so wirkungsvoll und effizient wie möglich zu gestalten. Diese Aufgabe wird durch ein Verfahren zur Kommunikation gemäß Anspruch 1 bzw. durch eine Komponente in einem Kommunikationsnetzwerk gemäß Anspruch 9 gelöst.

Erfindungsgemäß ist ein Verfahren zur Kommunikation bzw. eine Komponente in einem Kommunikationsnetzwerk vorgesehen, bei dem bzw. durch die einem Teilnehmer eine Berechtigungsstufe in Abhängigkeit davon zugewiesen wird, welches Szenario im Zeitpunkt der Zuweisung der Berechtigungsstufe für diesen Teilnehmer in diesem Kommunikationsnetzwerk gültig ist. Eine Berechtigungsstufe ist somit erfindungsgemäß einem Teilnehmer nicht mehr unter allen Umständen fest, also rein teilnehmerspezifisch zugeordnet, sondern die Berechtigungsstufe wird dem Teilnehmer erfindungsgemäß in Abhängigkeit von einem im Zeitpunkt der Zuweisung der Berechtigungsstufe für diesen Teilnehmer gültigen Szenario zugeteilt.

Unter einem Kommunikationsnetzwerk ist in diesem Zusammenhang jede Einrichtung zu verstehen, die eine Kommunikation einer Mehrzahl von Teilnehmern untereinander ermöglicht, vorzugsweise durch einen Transport von Nachrichten zwischen an einem Kommunikationsprozess beteiligten Teilnehmern über ein Netzwerk, vorzugsweise über ein digitales Datennetzwerk oder Telefonnetzwerk.

Unter einer Berechtigungsstufe ist in diesem Zusammenhang eine einem Teilnehmer in einem Kommunikationsnetzwerk dauerhaft oder zeitweise zugeordnete oder zugewiesene Eigenschaft zu verstehen, aufgrund welcher dem Teilnehmer Zugang zu Ressourcen des Kommunikationsnetzes oder seiner Einrichtungen gewährt wird. Unterschiedliche Berechtigungsstufen bedingen vorzugsweise unterschiedliche Prioritäten beim Zugriff von Teilnehmern, welche mit diesen Berechtigungsstufen ausgestattet sind, auf einzelne Ressourcen. Berechtigungsstufen korrespondieren daher vorzugsweise mit Prioritäten.

Unter einem Szenario ist in diesem Zusammenhang ein Satz von Parametern, vorzugsweise logischen, textförmigen oder numerischen Parametern, zu verstehen, welcher einen bestimmten Zustand des Kommunikationsnetzwerkes, der Teilnehmer, einer Anwendungs-Umgebung, in welcher die Teilnehmer des Kommunikationsnetzwerks agieren, oder weiterer relevanter Strukturen im Zusammenhang mit Kommunikationsprozessen, welche über das Kommunikationsnetzwerk abgewickelt werden, charakterisiert. Beispiele für Parameter eines Szenarios sind der momentane Standort eines Teilnehmers, beispielsweise eine Gebäude- oder Raumnummer innerhalb eines Unternehmensstandortes, GPS-Koordinaten, etc., der Eintritt eines bestimmten Ereignisses wie beispielsweise der Ausfall einer Produktionsanlage, temporäre Funktionen von Teilnehmern wie beispielsweise die Funktion eines Einsatzleiters oder dessen Assistenten, oder ähnliche anderer Parameter. Ein Satz solcher Parameter charakterisiert ein Szenario im vorliegenden Sinne dann, wenn dieser Satz von Parametern für die Zuweisung einer Berechtigungsstufe an wenigstens einen Teilnehmer in dem Sinne ausreicht, dass für die Zuweisung einer Berechtigungsstufe an diesen wenigstens einen Teilnehmer keine weiteren Informationen über das Szenario benötigt werden. Das schließt nicht aus, dass bei einer Erweiterung eines Parametersatzes um einen oder mehrere weitere Parameter einem oder mehreren Teilnehmern andere Berechtigungsstufen zugewiesen werden können, weil ein erweiterter Parametersatz möglicherweise eine realistischere Charakterisierung eines Szenarios sein kann als der ursprüngliche Parametersatz.

Solche ein Szenario in diesem Sinne charakterisierenden Parameter werden für die Zuweisung einer Berechtigungsstufe an einen Teilnehmer vorzugsweise dadurch berücksichtigt, dass diese Parameter von einer Komponente in einem Kommunikationsnetzwerk ausgewertet werden. Eine derartige Komponente weist einem Teilnehmer eine Berechtigungsstufe vorzugsweise in Abhängigkeit davon zu, welches Szenario im Zeitpunkt der Zuweisung der Berechtigungsstufe für diesen Teilnehmer in diesem Kommunikationsnetzwerk gültig ist. Besonders vorzugsweise ist im Zusammenhang mit dieser Komponente eine Speichereinrichtung zum Speichern von Parametern und Regeln von Szenarien vorgesehen und eine Prozessoreinrichtung zur Ermittlung von Berechtigungsstufen durch automatische Auswertung der gespeicherten Parameter und Regeln. Parameter werden vorzugsweise durch Übermittlung über Kommunikationseinrichtungen aktualisiert und/oder von Sensoren erfasst und laufend aktualisiert. Beispielsweise kann der Ausfall einer Produktionsanlage oder einer Versorgungseinrichtung oder der Eintritt eines Notfalls durch Übermittlung vorzugsweise logischer oder numerischer Parameter der auswertenden Komponente gemeldet werden.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem der Zugriff auf eine Ressource in dem Kommunikationsnetzwerk durch einen Teilnehmer in Abhängigkeit von der Berechtigungsstufe dieses Teilnehmers im Zeitpunkt des Zugriffs auf diese Ressource eröffnet oder beschränkt wird. Dieses Ausführungsbeispiel der Erfindung ist mit dem Vorteil verbunden, dass Berechtigungen und somit Prioritäten nicht mehr, wie beim Stand der Technik üblich, permanent für einen Teilnehmer gültig sind, da sie durch in Abhängigkeit von bestimmten Szenarien vorzugsweise unabhängig von administrativen Maßnahmen geändert werden können.

Mit der Erfindung wird es möglich, mobilen Teilnehmern, sobald sie sich in einem bestimmten örtlichen Bereich mit knappen Ressourcen, beispielsweise mit einer geringen verfügbaren Bandbreite befinden, eine niedrigere Priorität einzuräumen oder, bei ausreichender Bandbreite oder im Falle einer besonderen temporären Funktion, bestimmten Teilnehmern temporär eine höhere Priorität einzuräumen. Solche Maßnahmen können beispielsweise bei Unglücksfällen den Einsatz des Einsatzpersonals, beispielsweise einer Unternehmens-Havarieabteilung oder einer Feuerwehr wirksam unterstützen. Aufgrund äußerer Ereignisse wie einem Brand, einem Feueralarm oder einem Katastrophenalarm, kann eine flexible Neuvergabe von Prioritäten die Einsatzkräfte wirksam unterstützen. Die Erfindung ermöglicht es, Berechtigungsstufen dynamisch, vorzugsweise anhand von Regeln oder von anderen Parametern wie Aufenthaltsorten zeitlich flexibel zu vergeben.

Bei einer Vergabe von Berechtigungsstufen über einen Soft-Switch (oder Softswitch), wird es mithilfe der Erfindung möglich, bestimmten Teilnehmern Berechtigungsstufen kontext-abhängig zuzuweisen. Der Kontext wird in diesen Fällen vorzugsweise durch den Standort des Anrufers, durch Firmenregeln oder durch den Eintritt bestimmter Ereignisse oder durch Parameter anderer Szenarien bestimmt.

Ein Softswitch (oder Soft-Switch) ist eine Netzwerkkomponente für moderne Kommunikationsnetze, die beispielsweise IP-Telefonie als Dienst anbieten (http://de.wikipedia.org/wiki/Softswitch). Ein Softswitch übernimmt in einem solchen Netzwerk die Ansteuerung der Media Gateways und die notwendige Signalisierung. Sie ist die zentrale Funktionskomponente zur Steuerung, die "Intelligenz" des Netzes. Im engeren Sinne bezeichnet der Softswitch auch Einrichtungen, in welche die Funktion des Media Gateways integriert ist.

Die Bezeichnung Softswitch ist auf eine Software zurückzuführen, mit welcher in einem Softswitch eine zentrale Steuerung der Vermittlungsaufgaben ausgeführt wird, die in der herkömmlichen Telefonie ein "Switch" ausführt. Die Software ist aus Gründen der Ausfallsicherheit vorzugsweise auf fehlertoleranten Servern installiert und übernimmt vorzugsweise auch die Verbindungssteuerung. Trotz seines Namens ist ein Softswitch regelmäßig keine reine Softwarelösung. Zur Realisierung eines sogenannten Carrier Grade Softswitches wird sogar ein erheblicher Hardware-Aufwand benötigt.

Zu den Vermittlungsaufgaben eines Softswitches gehören Funktionen der Protokollkonvertierung und Autorisierung, und Managementfunktionen der Verwaltung und Abrechnung. Diese Funktionen sind erforderlich für das Routen von Sprachverbindungen zwischen den unterschiedlichen Netztypen sowie für das Ressourcen- und Bandbreitenmanagement, das eine ausreichende Dienstgüte gewährleisten soll.

Zur Verwirklichung der Erfindung ist eine Komponente vorgesehen, welche als Eingabeparameter Parameter von Szenarien, wie beispielsweise Standort-Informationen von Kommunikationsteilnehmern, die Unternehmensinfrastruktur vorzugsweise mit allen verfügbaren Zweigen, "Branches", Zweigstellen oder Nebenstellen und Zugangsbandbreiten oder auch so genannte Szenarien-Profile vorsieht. Vorzugsweise sind in dieser Komponente die Regeln gespeichert, die bei bestimmten Ereignissen oder Szenarien gültig werden.

Im Falle eines Anrufes eines bestimmten Teilnehmers kontaktiert der Soft-Switch vorzugsweise die Berechtigungsstufen-Komponente, um die aktuelle Berechtigungsstufe des anrufenden Teilnehmers zu erfahren. Diese Komponente kann vorteilhaft als separater Service oder Server oder auch als interne Komponente des Soft-Switches realisiert sein. Die oben erwähnten Szenarien können beispielsweise sein: "Betriebsfeuerwehr im Einsatz", "Ausfall einer WAN-Verbindung" oder "Notrufnummer gewählt", oder andere Szenarien mit dem Ziel, einer bestimmten Gruppe von Teilnehmern in Abhängigkeit von bestimmten Bedingungen andere Berechtigungsstufen zu erteilen. Einsatzkräfte bekämen somit im Notfallszenario eine höhere oder die höchste Priorität, während andere Teilnehmer entsprechend in der Berechtigungsstufe zurückgestuft würden.

Die gemäß einem bevorzugten Ausführungsbeispiel vorgesehene Berechtigungsstufen-Komponente ermittelt vorzugsweise zunächst den Standort des Teilnehmers, entweder direkt über Location-by-Value oder Location-by-Reference über einen entsprechenden zentralen Location Information Service (LIS).

Orts-Information kann direkt durch Übermittlung von Koordination oder anderen Ortsangaben ("Location-by-value"), beispielsweise durch Übermittlung eines sogenannten" Presence Information Data Format Location Object" (PIDF-LO) gemäß RFC4119 (http://tools.ietf.org/html/rfc4119) oder indirekt durch Übermittlung einer Referenz ("Location-by-Reference"), beispielsweise gemäß RFC5808 geschehen. Eine solche Referenz wird vorzugsweise in Form eines sogenannten "Location URI" gegeben.

Ein Uniform Resource Identifier (URI) (engl. "einheitlicher Bezeichner für Ressourcen") ist ein Identifikator und besteht aus einer Zeichenfolge, die zur Identifizierung einer abstrakten oder physischen Ressource dient (http://de.wikipedia.org/wiki/Uniform_Resource_ldentifier). URIs werden zur Bezeichnung von Ressourcen (wie Webseiten, sonstigen Dateien, Aufruf von Webservices, aber auch z. B. E-Mail-Empfängern) im Internet und dort vor allem im WWW eingesetzt. URIs können als Zeichenfolge (kodiert mit einem Zeichensatz) in digitale Dokumente, insbesondere solche im HTML-Format eingebunden werden. Eine Erweiterung der nur aus druckbaren ASCII-Zeichen bestehenden URIs sind die Internationalized Resource Identifiers (IRIs).

Vorzugsweise werden die hierfür erforderlichen Informationen aus einem Unternehmensnetzwerk oder von den an solch ein Netzwerk angeschlossenen Telefonen oder von anderen Endgeräten in diesem Netzwerk bezogen. Anhand des Ortes (der "Location") und anhand der Szenarien-Profile wird vorzugsweise über eine interne Unternehmens-Logik (eine so genannte "Business-Logik") eine bestimmte Berechtigungsstufe berechnet und dem Soft-Switch mitgeteilt. Weiterhin speichert diese Komponente vorzugsweise alle vergebenen Berechtigungsstufen, um ein genaues Abbild der vergebenen Ressourcen innerhalb des Unternehmensnetzwerkes zu erhalten.

Falls die Anforderungen für die Priorität eines Anrufes nicht den für den Teilnehmer eingestellten Regeln entsprechen, reagiert der erfindungsgemäß ausgestaltete Soft-Switch vorzugsweise auf zweifache Art:
- Der Ruf wird abgebrochen.
- Der Ruf wird den Regeln entsprechend "umgestuft", indem dem Ruf beispielsweise eine neue Priorität zugeordnet wird, und dem rufenden Telefon wird vorzugsweise eine Rückmeldung über die neue Priorität gesendet, damit der anrufende Teilnehmer hierüber informiert werden kann. Der Ruf wird dann vorzugsweise mit der neu zugeordneten Priorität weitergeführt. Das kann beispielsweise bei Verwendung des SIP-Protokolls über die Nachrichten "180 Ringing" oder "200 OK" erfolgen.

Gemäß anderer Ausführungsformen der Erfindung könnte die Berechtigungsstufen-Komponente mit einem Network-Access Control (NAC) Service des Unternehmensnetzwerks kommunizieren, um eine genaue Übersicht über alle im Netzwerk angemeldeten und vorzugsweise auch autorisierten Netzwerkgeräte zu erhalten. Eine solche Übersicht schließt vorzugsweise Angaben über den Switch Port, die IP-Adresse, den Gerätetyp oder die notwendige Bandbreite und ähnliche Angaben ein.

Die Vergabe von Berechtigungsstufen oder Prioritäten für bestimmte Telefonanrufe und bestimmte Teilnehmer wird erfindungsgemäß vorzugsweise über eine zentrale Komponente gesteuert. Auch Teilnehmer eines bestimmten Standortes, beispielsweise Teilnehmer in einem Gebäude innerhalb eines Gebäude-Komplexes oder innerhalb der Firmenzentrale, können dann bei Vorliegen entsprechender Szenarien in einem Unternehmensnetzwerk dynamisch Berechtigungsstufen erhalten. Eine zentrale Berechtigungsstufen-Komponente verarbeitet vorzugsweise Ortsinformationen der Teilnehmer, Bandbreiteninformationen, die Unternehmensinfrastruktur oder auch andere Parameter von Szenarien, um abhängig von vorliegenden aktuellen Szenarien bestimmte Berechtigungsstufen zu ermitteln, mit dem Ziel, die wirklich wichtigen Anrufe für eine gegebene Situation überhaupt bzw. mit einer bestimmten Dienstgüte zu ermöglichen.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem ein Konflikt bei einem Zugriff auf eine Ressource in dem Kommunikationsnetzwerk durch wenigstens zwei Teilnehmer in Abhängigkeit von den Berechtigungsstufen dieser Teilnehmer im Zeitpunkt des Zugriffs auf diese Ressource gelöst wird. Im Gegensatz zu bekannten Lösungen, bei denen Zugriffskonflikte auf Ressourcen mit statischen, den Teilnehmern dauerhaft zugeordneten Berechtigungsstufen gelöst werden, ermöglicht die Erfindung die Lösung von Zugriffskonflikten auf Ressourcen in Abhängigkeit von situationsgerecht und zeitnahe vergebenen Berechtigungsstufen und daraus abgeleiteten Prioritäten, beispielsweise in Abhängigkeit von aktuellen Funktionen, welche von Teilnehmern ausgeübt werden.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem wenigstens eine Ressource eine Verbindung zu wenigstens einem anderen Teilnehmer oder eine bei dieser Verbindung verfügbare Datenrate oder Bandbreite ist. Mit diesem Ausführungsbeispiel der Erfindung ist der Vorteil verbunden, dass die Zuweisung von Ressourcen, wie beispielsweise von Bandbreiten oder Datenraten, welche zur Durchführung von ressourcenintensiven Kommunikationsformen, wie beispielsweise Videokonferenzen erforderlich sind, zeitlich flexibel in Abhängigkeit von momentan bestehenden Szenarien erfolgen kann.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem ein Szenario durch wenigstens einen Parameter definiert wird, der einen Standort eines Teilnehmers bezeichnet. Bei diesem Ausführungsbeispiel der Erfindung ergibt sich der Vorteil, dass die Berechtigungsstufe eines Teilnehmers sich bereits allein durch einen Wechsel eines Standortes des Teilnehmers, an welchem dieser Teilnehmer einen Anruf einleiten will, geändert werden kann. So kann ein bestimmter Teilnehmer, der im Normalfall eine geringe Berechtigungsstufe besitzt, durch die Benutzung eines Endgerätes in einer Notrufzentrale oder in einer Firmenzentrale eine höhere Berechtigungsstufe erhalten. Dies kann unabhängig von der Benutzung eines Festnetzendgerätes geschehen, beispielsweise dadurch, dass bei Verwendung eines Mobilfunkgerätes des Teilnehmers dessen aktueller Standort ermittelt wird und die aktuelle Berechtigungsstufe dieses Teilnehmers geändert wird, weil dieser Teilnehmer aktuell von einem Standort aus einen Anruf einleiten möchte, aufgrund dessen ihm, weil dies beispielsweise in einschlägigen Unternehmens-Regel so festgelegt ist, eine höhere Berechtigungsstufe zugeteilt werden soll.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem ein Szenario durch wenigstens einen Parameter definiert wird, der den Eintritt eines Ereignisses bezeichnet. Beispiele für solche Ereignisse sind Katastrophen, Unglücksfälle, Ausnahmesituationen, Zusammenbrüche von Infrastrukturen.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem wenigstens eine Berechtigungsstufe in einem Szenario durch Auswertung wenigstens einer in diesem Szenario gültigen Regel ermittelt wird.

Gemäß einem bevorzugten Ausführungsbeispiel der Erfindung, dessen Merkmale auch mit Merkmalen anderer Ausführungsbeispiele kombiniert werden können, ist ein Verfahren vorgesehen, bei dem zur Eröffnung oder Beschränkung des Zugriffs eines Teilnehmers auf eine Ressource die aktuelle Berechtigungsstufe dieses Teilnehmers von einer Komponente in dem Kommunikationsnetzwerk erfragt wird, welche die Zuweisung der Berechtigungsstufen vornimmt.

Gemäß einem bevorzugten Ausführungsbeispiel der Erfindung, dessen Merkmale auch mit Merkmalen anderer Ausführungsbeispiele kombiniert werden können, ist eine Komponente vorgesehen, bei der eine Speichereinrichtung zum Speichern von Parametern und Regeln von Szenarien vorgesehen ist, und dass eine Prozessoreinrichtung zur Ermittlung von Berechtigungsstufen durch automatische Auswertung der gespeicherten Parameter und Regeln vorgesehen ist.

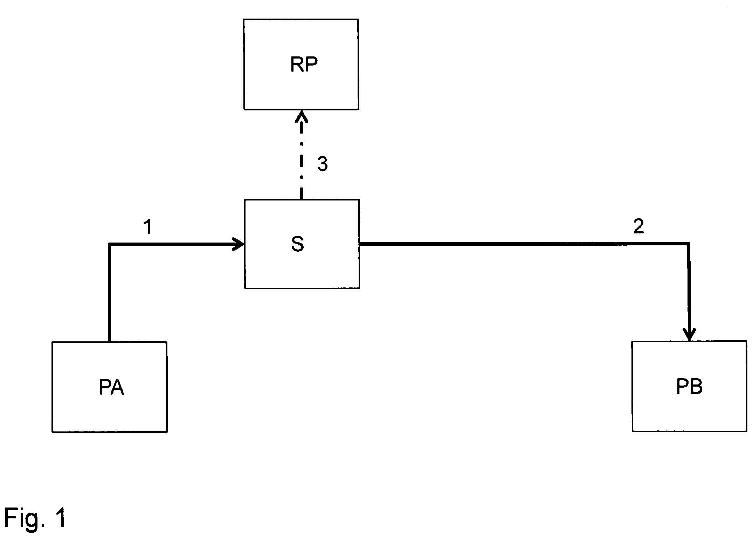

Im Folgenden wird die Erfindung anhand von bevorzugten Ausführungsbeispielen und mithilfe einer Figur näher beschrieben. Dabei zeigt
Figur 1 in schematischer Weise den Ablauf des erfindungsgemäßen Verfahrens gemäß einem Ausführungsbeispiel der Erfindung.

Bei dem erfindungsgemäßen Verfahren zur Kommunikation in einem Kommunikationsnetzwerk wird einem Teilnehmer eine Berechtigungsstufe in Abhängigkeit davon zugewiesen, welches Szenario im Zeitpunkt der Zuweisung der Berechtigungsstufe für diesen Teilnehmer in diesem Kommunikationsnetzwerk gültig ist. In dem durch Figur 1 verdeutlichten Ausführungsbeispiel wird die Berechtigungsstufe des Teilnehmers A, welcher das Telefon PA verwendet, um den Teilnehmer B an dem Telefon PB anzurufen, im Zeitpunkt des Verbindungsaufbaus über einen SIP-Server S mithilfe einer Komponente RP vergeben. Das Telefon PA des Teilnehmers A signalisiert 1 dem SIP-Server S den Wunsch, den Ruf aufzubauen. Dabei teilt das Endgerät PA dem SIP-Server S vorzugsweise auch den Ort mit, an dem sich das Endgerät PA im Zeitpunkt des Rufaufbaus befindet.

In der "Resourcen-Prioritäts-Komponente" RP oder in einer ihr zugänglichen Speichereinrichtung ist vorzugsweise eine Regel gespeichert, die dazu führt, dass dieser Ruf die Prioritätsstufe oder Berechtigungsstufe "5" erhält, falls Teilnehmer A von Ort "a" aus anruft. Da die Prämisse dieser Regel erfüllt ist (A ruft von Ort a aus an), erhält der Ruf in Folge einer Anfrage 3 des SIP-Servers S an die Komponente RP die Prioritätsstufe oder Berechtigungsstufe "5". Der SIP-Server S baut nun 2 den Ruf des A am Gerät PA an den B am Gerät PB mit dieser Prioritätsstufe oder Berechtigungsstufe "5" auf 2.

## Patentansprüche

1. Verfahren zur Kommunikation in einem Kommunikationsnetzwerk durchgeführt durch eine Komponente in dem Kommunikationsnetzwerk, bei dem einem Teilnehmer (A) im Zeitpunkt des Zugriffs auf eine Ressource (PA) in dem Kommunikationsnetzwerk von der Komponente eine Berechtigungsstufe in Abhängigkeit davon zugewiesen wird, welches Szenario im Zeitpunkt der Zuweisung der Berechtigungsstufe für diesen Teilnehmer (A) in diesem Kommunikationsnetzwerk gültig ist,
**dadurch gekennzeichnet, dass**
die Berechtigungsstufe in Abhängigkeit von einem das Szenario charakterisierenden Parametersatz, der zumindest die temporäre Funktion des Teilnehmers (A) umfasst, automatisch zugewiesen wird, und
die Berechtigungsstufe dynamisch an die Änderung des Parametersatzes angepasst wird.

2. Verfahren nach Anspruch 1, **dadurch gekennzeichnet, dass** der Zugriff auf eine Ressource (PA) in dem Kommunikationsnetzwerk durch einen Teilnehmer (A) in Abhängigkeit von der Berechtigungsstufe dieses Teilnehmers (A) im Zeitpunkt des Zugriffs auf diese Ressource (PA) eröffnet oder beschränkt wird.

3. Verfahren nach Anspruch 2, **dadurch gekennzeichnet, dass** ein Konflikt bei einem Zugriff auf eine Ressource (PA) in dem Kommunikationsnetzwerk durch wenigstens zwei Teilnehmer (A, B) in Abhängigkeit von den Berechtigungsstufen dieser Teilnehmer (A, B) im Zeitpunkt des Zugriffs auf diese Ressource (PA) gelöst wird.

4. Verfahren nach einem der Ansprüche 2 oder 3, **dadurch gekennzeichnet, dass** wenigstens eine Ressource (PA) eine Verbindung zu wenigstens einem anderen Teilnehmer (B) oder eine bei dieser Verbindung verfügbare Datenrate oder Bandbreite ist.

5. Verfahren nach einem der vorhergehenden Ansprüche, **dadurch gekennzeichnet, dass** der Parametersatz wenigstens einen Parameter umfasst, der einen Standort eines Teilnehmers (A) bezeichnet.

6. Verfahren nach einem der vorhergehenden Ansprüche, **dadurch gekennzeichnet, dass** der Parametersatz wenigstens einen Parameter umfasst, der den Eintritt eines Ereignisses bezeichnet.

7. Verfahren nach einem der vorhergehenden Ansprüche, **dadurch gekennzeichnet, dass** wenigstens eine Berechtigungsstufe in einem Szenario durch Auswertung wenigstens einer in diesem Szenario gültigen Regel ermittelt wird.

8. Verfahren nach Anspruch 2 in Verbindung mit einem der vorhergehenden Ansprüche, **dadurch gekennzeichnet, dass** zur Eröffnung oder Beschränkung des Zugriffs eines Teilnehmers (A) auf eine Ressource (PA) die aktuelle Berechtigungsstufe dieses Teilnehmers (A) von einer Komponente (RP) in dem Kommunikationsnetzwerk erfragt wird, welche die Zuweisung der Berechtigungsstufen vornimmt.

9. Komponente (RP) in einem Kommunikationsnetzwerk, welche dafür eingerichtet ist, die Schritte des Verfahrens eines der vorhergehenden Ansprüche durchzuführen und somit einem Teilnehmer (A) eine Berechtigungsstufe gemäß einem Verfahren nach einem der vorhergehenden Ansprüche zuzuweisen,.

10. Komponente (RP) nach Anspruch 9, **dadurch gekennzeichnet, dass** eine Speichereinrichtung zum Speichern von Parametern und Regeln von Szenarien vorgesehen ist, und dass eine Prozessoreinrichtung zur Ermittlung von Berechtigungsstufen durch automatische Auswertung der gespeicherten Parameter und Regeln vorgesehen ist.

## Claims

1. A method for communication in a communication network, carried out by a component in the communication network, in which the component assigns an authorization level to a subscriber (A) at a time when a resource (PA) is accessed in the communication network, dependent upon the applicable scenario at the time when the authorization level is assigned to the subscriber (A) in the communication network, **characterized in that**
the authorization level is assigned automatically dependent upon a parameter set that characterizes the scenario and comprises at least the temporary function of the subscriber (A), and
the authorization level is adapted dynamically to changes in the parameter set.

2. The method according to Claim 1, **characterized in that** a subscriber (A) enables or restricts access to a resource (PA) in the communication network dependent upon the authorization level of said subscriber (A) at the time at which said resource (PA) is accessed.

3. The method according to Claim 2, **characterized in that** a conflict in accessing a resource (PA) in the communication network is resolved by at least two subscribers (A, B), dependent upon the authorization levels of those subscribers (A, B) at the time at which said resource (PA) is accessed.

4. The method according to either of Claims 2 and 3, **characterized in that** at least one resource (PA) is a connection to at least one other subscriber (B) or a data rate or bandwidth available to that connection.

5. The method according to any of the preceding claims, **characterized in that** the parameter set comprises at least one parameter that designates the location of a subscriber (A).

6. The method according to any of the preceding claims, **characterized in that** the parameter set comprises at least one parameter that designates the occurrence of an event.

7. The method according to any of the preceding claims, **characterized in that** at least one authorization level in a scenario is determined by evaluating at least one rule applicable to that scenario.

8. The method according to Claim 2 in conjunction with any of the preceding claims, **characterized in that** to enable or restrict the access of a subscriber (A) to a resource (PA), the current authorization level of that subscriber (A) is queried by a component (RP) of the communication network that carries out the assignment of the authorization levels.

9. A component (RP) in a communication network, which is configured to implement the steps of the method of any of the preceding claims, and thus to assign an authorization level to a subscriber (A) according to a method of any of the preceding claims.

10. The component (RP) according to Claim 9, **characterized in that** a memory device for storing parameters and rules for scenarios is provided, and **in that** a processor device for determining authorization levels by automatic evaluation of the stored parameters and rules is provided.

## Revendications

1. Procédé de communication dans un réseau de communication effectué par un composant dans le réseau de communication, dans lequel à l'instant de l'accès à une ressource (PA) dans le réseau de communication par le composant, un niveau d'autorisation est attribué à un abonné (A) en fonction du scénario qui est valable à l'instant de l'attribution du niveau d'autorisation pour cet abonné (A) dans ce réseau de communication,
**caractérisé en ce que**
le niveau d'autorisation est attribué automatiquement en fonction d'un ensemble de paramètres caractérisant le scénario, qui comprend au moins la fonction temporaire de l'abonné (A), et
le niveau d'autorisation est adapté dynamiquement à la modification de l'ensemble de paramètres.

2. Procédé selon la revendication 1, **caractérisé en ce que** l'accès à une ressource (PA) dans le réseau de communication par un abonné (A) est ouvert ou limité en fonction du niveau d'autorisation de cet abonné (A) à l'instant de l'accès à cette ressource (PA).

3. Procédé selon la revendication 2, **caractérisé en ce qu'**un conflit lors d'un accès à une ressource (PA) dans le réseau de communication par au moins deux abonnés (A, B) est résolu en fonction des niveaux d'autorisation de ces abonnés (A, B) à l'instant de l'accès à cette ressource (PA).

4. Procédé selon une des revendications 2 ou 3, **caractérisé en ce qu'**au moins une ressource (PA) est une liaison à au moins un autre abonné (B) ou un débit de données ou une largeur de bande disponible lors de cette liaison.

5. Procédé selon l'une quelconque des revendications précédentes, **caractérisé en ce que** l'ensemble de paramètres comporte au moins un paramètre qui désigne un lieu où se trouve un abonné (A).

6. Procédé selon l'une quelconque des revendications précédentes, **caractérisé en ce que** l'ensemble de paramètres comporte au moins un paramètre qui désigne l'apparition d'un événement.

7. Procédé selon l'une quelconque des revendications précédentes, **caractérisé en ce qu'**au moins un niveau d'autorisation dans un scénario est déterminé par évaluation d'au moins une règle valable dans ce scénario.

8. Procédé selon la revendication 2 en conjonction avec l'une quelconque des revendications précédentes, **caractérisé en ce que**, lors de l'ouverture ou de la limitation de l'accès d'un abonné (A) à une ressource (PA), le niveau d'autorisation actuel de cet abonné (A) est interrogé par un composant (RP) dans le réseau de communication qui réalise l'attribution des niveaux d'autorisation.

9. Composant (RP) dans un réseau de communication, qui est conçu pour exécuter les étapes du procédé de l'une quelconque des revendications précédentes et ainsi pour attribuer à un abonné (A) un niveau d'autorisation conformément à un procédé selon l'une quelconque des revendications précédentes.

10. Composant (RP) selon la revendication 9, **caractérisé en ce qu'**il est prévu un système de mémoire pour mémoriser des paramètres et des règles de scénarios et **en ce qu'**il est prévu un système de processeur pour déterminer des niveaux d'autorisation par une évaluation automatique des paramètres et des règles mémorisés.
